# EUROPEAN PATENT APPLICATION

(11) **EP 4 227 356 A1**
(43) Date of publication of application: **16.08.2023**
(21) Application number: 21877733.2
(22) Date of filing: 08.10.2021
(51) Int. Cl.: C08K 5/5419, C08K 7/18, C08K 13/04, C08L 83/05, C08L 83/07, C08K 3/013, C08K 3/28

(54) **THERMALLY CONDUCTIVE SILICONE COMPOSITION AND THERMALLY CONDUCTIVE MEMBER**

(30) Priority: 09.10.2020 JP 2020171542
(71) Applicant: Dow Toray Co., Ltd., Tokyo 140-8617 (JP)
(72) Inventor: OTA, Kenji, Ichihara-shi, Chiba 299-0108 (JP)
(74) Representative: Murgitroyd & Company
(86) International application number: PCT/JP2021/037267
(87) International publication number: WO 2022/075434

(57) **Abstract**

A thermally conductive silicone composition of the present invention comprises: (A) an organopolysiloxane having on average at least two alkenyl groups in a molecule; (B) an organohydrogenpolysiloxane having on average at least two silicon atom-bonded hydrogen atoms in a molecule; (C) a hydrosilylation reaction catalyst; (D) a thermally conductive filler comprising: (D-1) a thermally conductive powder other than an aluminum nitride powder, said thermally conductive powder having an average particle diameter of 0.1 µm or more and less than 5 µm, (D-2) an aluminum nitride powder having an average particle diameter of 20 µm or more and less than 80 µm, and (D-3) a spherical aluminum oxide powder and/or a spherical magnesium oxide powder having an average particle size of 80 µm or larger, respectively; and (E) a specific surface treating agent or wetting agent. The composition has favorable handling and filling properties and cures to form a thermally conductive member having high thermal conductivity and in which the occurrence of internal cracks under high temperatures is suppressed.

## Description

### TECHNICAL FIELD

The present invention relates to a thermally conductive silicone composition and a thermally conductive member obtained by curing the same.

### BACKGROUND ART

Curable thermally conductive silicone compositions containing a thermally conductive filler such as a silica powder, an aluminum oxide powder, a boron nitride powder, an aluminum nitride powder, a magnesium oxide powder, or the like are used to efficiently transfer heat generated by an electronic device to a heat dissipating member. In recent years, there has been a demand for compositions with high thermal conductivity, and a method of adding large amounts of at least two types of thermally conductive fillers with different average particle diameters is known.

For example, Patent Document 1 discloses a thermally conductive silicone composition having a thermal conductivity of 5 W/m·K or more, in which at least 1,000 parts by mass of a spherical aluminum oxide powder with an average particle diameter of 5 to 40 µm and a spherical aluminum oxide powder with an average particle diameter of 0.1 to 3 µm are blended in 100 parts by mass of an organopolysiloxane serving as a main component. Furthermore, Patent Document 2 discloses a thermally conductive silicone composition containing 1200 to 6500 parts by mass of an irregular aluminum oxide powder having an average particle diameter of 10 to 30 µm, a spherical aluminum oxide powder having an average particle diameter of 30 to 85 µm, and an aluminum hydroxide powder or aluminum oxide powder having an average particle diameter of 0.1 to 6 µm, relative to 100 parts by mass of an organopolysiloxane serving as a main component, and having a thermal conductivity of 3.0 W/m·K or more.

However, in order to obtain a thermally conductive silicone composition with higher thermal conductivity, a high amount of an aluminum nitride powder with relatively high thermal conductivity was added. As a result, the viscosity of the obtained composition significantly increased. Furthermore, it was found that a thermally conductive member obtained by curing the composition had a problem where cracks occurred inside during aging at a high temperature. Therefore, there has been a need for a thermally conductive silicone composition that has high thermal conductivity and does not have internal cracking problems under high temperatures after curing.

### Prior Art Documents

### Patent Documents

Patent Document 1: Japanese Unexamined Patent Application Publication No. 2002-003831
Patent Document 2: Japanese Unexamined Patent Application Publication No. 2013-147600

### BRIEF SUMMARY OF THE INVENTION

### Technical Problem

An object of the present invention to provide a thermally conductive silicone composition which has favorable handling and filling properties and can cure to form a thermally conductive member having high thermal conductivity, for example, a thermal conductivity of 7 W/m·K or more, and in which the occurrence of internal cracks under high temperatures is suppressed. Another object of the present invention is to provide a thermally conductive member having high thermal conductivity, for example, a thermal conductivity of 7 W/m·K or more, and in which the occurrence of internal cracks under high temperatures is suppressed.

### Solution to Problem

A thermally conductive silicone composition of the present invention comprises:
(A) an organopolysiloxane having on average at least two alkenyl groups in a molecule and a viscosity at 25°C of 10 to 100,000 mPa·s;
(B) an organohydrogenpolysiloxane having on average at least two silicon atom-bonded hydrogen atoms in a molecule, the amount of silicon atom-bonded hydrogen atoms in component (B) being 0.2 to 5 mols relative to 1 mol of alkenyl groups in component (A);
(C) a catalytic amount of a hydrosilylation reaction catalyst;
(D) a thermally conductive filler comprising the following components (D-1) to (D-3):
   (D-1) a thermally conductive powder other than an aluminum nitride powder, said thermally conductive powder having an average particle diameter of 0.1 µm or more and less than 5 µm;
   (D-2) an aluminum nitride powder having an average particle diameter of 20 µm or more and less than 80 µm; and
   (D-3) a spherical aluminum oxide powder and/or spherical magnesium oxide powder having an average particle diameter of 80 µm or more, respectively,
   the total amount of components (D-1) to (D-3) being an amount that is 70 to 90% by volume of the present composition, and the amount of component (D-2) being an amount that is 5 to 30% by volume of the present composition; and
(E) a surface treating agent or wetting agent comprising the following components (E-1) and (E-2):
   (E-1) an organopolysiloxane represented by the following general formula:

      R¹(R²₂SiO)ₘSiR²₂-R³-SiR²ₐ(OR⁴)₍₃₋ₐ₎

      wherein R¹ represents an alkyl group having 1 to 6 carbon atoms or an alkenyl group having 2 to 6 carbon atoms, each R² independently represents an alkyl group having 1 to 6 carbon atoms, R³ represents an oxygen atom or an alkylene group having 2 to 6 carbon atoms, R⁴ represents an alkyl group having 1 to 3 carbon atoms, "m" represents an integer from 1 to 200, and "a" represents 0, 1, or 2;
   (E-2) an alkoxysilane represented by the following general formula or a partially hydrolyzed condensate thereof:

      R⁵_{b}R²_{c}Si(OR⁴)_{(3-b-c)}

      wherein R² and R⁴ are the same as described above, R⁵ represents an alkyl group having 6 to 18 carbon atoms, "b" represents 1 or 2, "c" represents 0 or 1, and "b" + "c" is 1 or 2,
      the mass ratio of component (E-1) to component (E-2) being 95:5 to 5:95, the amount of component (E) being 0.1 to 5.0 parts by mass relative to 100 parts by mass of component (D).

In various embodiments, component (D-1) is a thermally conductive powder selected from silver powders, aluminum powders, aluminum oxide powders, zinc oxide powders, and graphite powders, and is a thermally conductive powder comprising the following components (D-1-1) and (D-1-2):
(D-1-1) a thermally conductive powder other than an aluminum nitride powder, said thermally conductive powder having an average particle diameter of 0.1 µm or more and less than 1 µm; and
(D-1-2) a thermally conductive powder other than an aluminum nitride powder, said thermally conductive powder having an average particle diameter of 1 µm or more and less than 5 µm, the mass ratio of component (D-1-1) to component (D-1-2) being 95:5 to 5:95.

In various embodiments, the present composition comprises: (F) a hydrosilylation reaction inhibitor at 0.001 to 5 % by mass of the present composition, and (G) a heat resistance-imparting agent at 0.01 to 5.0 % by mass of the present composition.

In various embodiments, the present composition cures to form a thermally conductive member having a thermal conductivity of 7 W/m·K or more.

The thermally conductive member of the present invention is obtained by curing the composition described above.

### Effects of Invention

The thermally conductive silicone composition of the present invention has favorable handling and filling properties and can cure to form a thermally conductive member having high thermal conductivity, for example, a thermal conductivity of 7 W/m·K or more, and in which the occurrence of internal cracks under high temperatures is suppressed. The thermally conductive member of the present invention has high thermal conductivity, for example, a thermal conductivity of 7 W/m·K or more, and has suppressed occurrences of internal cracks under high temperatures.

### DETAILED DESCRIPTION OF THE INVENTION

### <Definitions>

In present specification, "average particle diameter" refers to a median diameter (d50) measured by a laser diffraction and scattering method.

### <Thermally Conductive Silicone Composition>

Component (A) is an organopolysiloxane serving as a main agent of the present composition and having on average at least two alkenyl groups in a molecule. Examples of the alkenyl groups in component (A1) include alkenyl groups having 2 to 6 carbon atoms such as vinyl groups, allyl groups, butenyl groups, pentenyl groups, hexenyl groups, and the like, and vinyl groups are preferred. Furthermore, examples of groups bonded to a silicon atom other than the alkenyl groups in component (A) include: methyl groups, ethyl groups, propyl groups, and other alkyl groups having 1 to 6 carbon atoms; phenyl groups, tolyl groups, and other aryl groups having 6 to 12 carbon atoms; and 3,3,3-trifluoropropyl groups and other alkyl halide groups having 1 to 6 carbon atoms. Methyl groups and phenyl groups are preferred. Furthermore, a small amount of hydroxyl groups; or methoxy groups, ethoxy groups, and other alkoxy groups may be bonded to the silicon atom in component (A) within a scope that does not impair an object of the present invention.

A molecular structure of component (A) is not particularly limited, and examples include straight chain structures, partially branched straight chain structures, branched chain structures, cyclic structures, three-dimensional mesh structures, and combinations of these molecular structures. Specifically, component (A) may be a straight chain organopolysiloxane only, a branched chain organopolysiloxane only, and even a mixture of a straight chain organopolysiloxane and branched chain organopolysiloxane.

Examples of such component (A) include: dimethylpolysiloxanes blocked with dimethylvinylsiloxy groups at both molecular chain terminals; copolymers of dimethylsiloxane and methylphenylsiloxane blocked with dimethylvinylsiloxy groups at both molecular chain terminals; copolymers of dimethylsiloxane and methylvinylsiloxane blocked with trimethylsiloxy groups at both molecular chain terminals; copolymers of dimethylsiloxane, methylvinylsiloxane and methylphenylsiloxane blocked with trimethylsiloxy groups at both molecular chain terminals; copolymers of dimethylsiloxane and methylvinylsiloxane blocked with silanol groups at both molecular chain terminals; polymers in which a portion of methyl groups of these polymers are substituted with alkyl groups other than methyl groups such as ethyl groups, propyl groups, and the like or substituted with a halogenated alkyl group such as a 3,3,3-trifluoropropyl group, and the like; polymers in which a portion of vinyl groups of these polymers are substituted with alkenyl groups other than vinyl groups such as allyl groups, butenyl groups, hexenyl groups, and the like; and mixtures of two or more of these polymers.

The viscosity of component (A) at 25°C is within a range of 10 to 100,000 mPa·s, and preferably within a range of 10 to 10,000 mPa·s or within a range of 10 to 1,000 mPa·s. This is because if the viscosity of component (A) is equal to or above the lower limit of the aforementioned range, the mechanical properties of the obtained thermally conductive member will be enhanced. In contrast, if the viscosity is equal to or below the upper limit of the aforementioned range, the handling and filling properties of the present composition will be enhanced. Note that the viscosity of component (A) at 25°C can be measured by a rotational viscometer in accordance with JIS K7117-1.

Component (B) is a crosslinking agent of the present composition and is an organohydrogenpolysiloxane having on average at least two silicon atom-bonded hydrogen atoms in a molecule. Although the upper limit of the number of silicon atom-bonded hydrogen atoms in component (B) is not particularly limited, a flexible thermally conductive member can be formed, and therefore, the number (average value) of silicon atom-bonded hydrogen atoms in a molecule is preferably 8 or less. Note that component (B) preferably contains at least an organohydrogenpolysiloxane having on average 2 to 4 silicon atom-bonded hydrogen atoms in a molecule. This is because such component (B) acts as a crosslinking extender when crosslinking component (A), causing the present composition to gently crosslink to form a relatively flexible cured product. Furthermore, examples of groups bonded to a silicon atom in component (B) include: methyl groups, ethyl groups, propyl groups, and other alkyl groups having 1 to 6 carbon atoms; phenyl groups, tolyl groups, and other aryl groups having 6 to 12 carbon atoms; 3,3,3-trifluoropropyl groups and other alkyl halide groups having 1 to 6 carbon atoms; and monovalent hydrocarbon groups that do not have an aliphatic unsaturated bond. Methyl groups and phenyl groups are preferred. Furthermore, a small amount of hydroxyl groups; or methoxy groups, ethoxy groups, and other alkoxy groups may be bonded to the silicon atom in component (B) within a scope that does not impair an object of the present invention.

Examples of component (B) include methylhydrogensiloxanes blocked with trimethylsiloxy groups at both molecular chain terminals, copolymers of methylhydrogensiloxane and dimethylsiloxane blocked with trimethylsiloxy groups at both molecular chain terminals, dimethylpolysiloxanes blocked with dimethylhydrogensiloxy groups at both molecular chain terminals, copolymers of methylhydrogensiloxane and dimethylsiloxane blocked with dimethylhydrogensiloxy groups at both molecular chain terminals, polymers in which a portion of methyl groups of these polymers are substituted with an alkyl group other than methyl groups such as ethyl groups, propyl groups, and the like or with halogenated alkyl groups such as 3,3,3-trifluoropropyl groups and the like, and mixtures of two or more types of these polymers.

While not particularly limited, the viscosity of component (B) at 25°C is preferably within a range of 1 to 1000 mPa·s, within a range of 1 to 500 mPa·s, or within a range of 1 to 100 mPa·s. This is because if the viscosity of component (B) is equal to or above the lower limit of the aforementioned range, the mechanical properties of the obtained thermally conductive member will be enhanced. In contrast, if the viscosity is equal to or below the upper limit of the aforementioned range, the handling and filling properties of the present composition will be enhanced. Note that the viscosity of component (B) at 25°C can be measured by a rotational viscometer in accordance with JIS K7117-1.

The amount of component (B) is an amount such that silicon atom-bonded hydrogen atoms in the present component are 0.2 to 5 mols, preferably 0.3 to 2.0 mols, or 0.4 to 1.0 mols, relative to 1 mol of the alkenyl groups in component (A). This is because if the amount of component (B) is equal to or above the lower limit of the aforementioned range, the present composition will be sufficiently cured. However, on the other hand, if the amount is equal to or below the upper limit of the aforementioned range, the heat resistance of the obtained thermally conductive member will be enhanced.

Component (C) is a hydrosilylation reaction catalyst to promote curing of the present composition. Examples include platinum-based catalysts, rhodium-based catalysts, and palladium-based catalysts, and a platinum-based catalyst is preferred due to the ability to significantly promote curing of the present composition. Examples of the platinum-based catalyst include: platinum fine powders, chloroplatinic acids, alcohol solutions of chloroplatinic acids, platinum-alkenylsiloxane complexes, platinum-olefin complexes, platinum-carbonyl complexes, and catalyst in which these platinum-based catalysts are dispersed or encapsulated with a thermoplastic resin such as silicone resin, polycarbonate resin, acrylic resin, or the like; (methylcyclopentadienyl) trimethyl platinum (IV), (cyclopentadienyl) trimethyl platinum (IV), (1,2,3,4,5-pentamethylcyclopentadienyl) trimethyl platinum (IV), (cyclopentadienyl) dimethylethyl platinum (IV), (cyclopentadienyl) dimethylacetyl platinum (IV), (trimethylsilylcyclopentadienyl) trimethyl platinum (IV), (methoxycarbonylcyclopentadienyl) trimethyl platinum (IV),

(dimethyphenylsilylcyclopentadienyl) trimethylcyclopentadienyl platinum (IV), trimethyl (acetyl acetonate) platinum (IV), trimethyl (3,5-heptanedionate) platinum (IV), trimethyl (methylacetoacetonate) platinum (IV), bis(2,4-pentanedionate) platinum (II), bis(2,4-hexanedionate) platinum (II), bis (2,4-heptanedionate) platinum (II), bis(3,5-heptanedionate) platinum (II), bis(1-phenyl-1,3-butanedionate) platinum (II), bis(1,3-diphenyl-1,3-propanedionate) platinum (II), bis(hexafluoroacetylacetonate) platinum (II), and other catalysts exhibiting activity when irradiated with high energy beams. Platinum-alkenylsiloxane complexes are particularly preferred.

Examples of alkenylsiloxanes in the platinum-alkenylsiloxane complexes include: 1,3-divinyl-1,1,3,3-tetramethyldisiloxane; 1,3,5,7-tetramethyl-1,3,5,7-tetravinylcyclotetrasiloxane; alkenyl siloxanes in which a portion of methyl groups of these alkenylsiloxanes is substituted with an ethyl group, a phenyl group, or the like; and alkenylsiloxanes in which a portion of vinyl groups of these alkenylsiloxanes is substituted with an allyl group, a hexenyl group, or the like. In particular, 1,3-divinyl-1,1,3,3-tetramethyldisiloxane is preferable because the platinum-alkenyl siloxane complex has good stability.

The amount of component (C) is a catalytic amount to promote curing of the present composition, and preferably is an amount where a metal atom in component (C) is within a range of 0.01 to 500 ppm, 0.01 to 100 ppm, or 0.01 to 50 ppm by mass relative to component (A).

Component (D) is a thermally conductive filler for imparting high thermal conductivity to a cured product of the present composition, and comprises the following components (D-1) to (D-3):
(D-1) a thermally conductive powder other than an aluminum nitride powder, said thermally conductive powder having an average particle diameter of 0.1 µm or more and less than 5 µm;
(D-2) an aluminum nitride powder having an average particle diameter of 20 µm or more and less than 80 µm; and
(D-3) a spherical aluminum oxide powder and/or spherical magnesium oxide powder having an average particle diameter of 80 µm or more, respectively

Component (D-1) is a thermally conductive powder other than aluminum nitride powder, said thermally conductive powder having an average particle diameter of 0.1 µm or more and less than 5 µm. Specific examples include: bismuth, lead, tin, antimony, indium, cadmium, zinc, silver, copper, nickel, aluminum, iron, metallic silicon, and other metal powders; alloy powders such as alloys and the like containing two or more types selected from a group consisting of bismuth, lead, tin, antimony, indium, cadmium, zinc, silver, aluminum, iron, and metallic silicon; aluminum oxide, zinc oxide, silicon oxide, magnesium oxide, beryllium oxide, chromium oxide, titanium oxide, other metal oxide powders; magnesium hydroxide, aluminum hydroxide, barium hydroxide, and calcium hydroxide, and other metal hydroxide powders; metal nitride powders other than aluminum nitride powders, such as boron nitride, silicon nitride, and the like; silicon carbide, boron carbide, titanium carbide, and other metal carbide powders; magnesium silicide, titanium silicate, zirconium silicate, tantalum silicate, niobium silicate, chromium silicate, tungsten silicate, molybdenum silicate, and other metal silicide powders; diamond, graphite, fullerenes, carbon nanotubes, graphene, activated carbon, and amorphous carbon black, and other carbon powders; soft magnetic alloy powders of Fe-Si alloys, Fe-Al alloys, Fe-Si-Al alloys, Fe-Si-Cr alloys, Fe-Ni alloys, Fe-Ni-Co alloys, Fe-Ni-Mo alloys, Fe-Co alloys, Fe-Si-Al-Cr alloys, Fe-Si-B alloys, Fe-Si-Co-B alloys, or the like; and ferrite powders of Mn-Zn ferrites, Mn-Mg-Zn ferrites, Mg-Cu-Zn ferrites, Ni-Zn ferrites, Ni-Cu-Zn ferrites, Cu-Zn ferrites, or the like. Metal powders, metal oxide powders, or carbon powders are preferable, and silver powders, aluminum powders, aluminum oxide powders, zinc oxide powders, and graphite powders are more preferable. Furthermore, electrical insulating properties are required in the present composition, metal oxide powders are preferred, and aluminum oxide powders or zinc oxide powders are particularly preferable.

The shape of component (D-1) is not particularly limited, and includes, for example, spherical shapes, needle shapes, disk shapes, rod shapes, and irregular shapes. Spherical shapes and irregular shapes are preferred. Furthermore, the average particle diameter of component (D-1) is 0.1 µm or more and less than 5 µm, and such component (D-1) is preferably a thermally conductive powder comprising the following components (D-1-1) and (D-1-2):
(D-1-1) a thermally conductive powder other than an aluminum nitride powder, said thermally conductive powder having an average particle diameter of 0.1 µm or more and less than 1 µm
(D-1-2) a thermally conductive powder other than an aluminum nitride powder, said thermally conductive powder having an average particle diameter of 1 µm or more and less than 5 µm

In component (D-1), the mass ratio of the aforementioned component (D-1-1) to the aforementioned component (D-1-2) is not particularly limited, but the mass ratio thereof is preferably within a range of 95:5 to 5:95. Such component (D-1-1) is generally available. For example, polyhedral spherical α-type aluminum oxide powder (AA04 from Sumitomo Chemical), pulverized aluminum oxide powder (AES-12 from Sumitomo Chemical), and the like can be used. Furthermore, such component (D-1-2) is also generally available. A spherical melt-solidified aluminum oxide powder (AZ2-75 from Micron), a polyhedral spherical α-type aluminum oxide powder (AA2 from Sumitomo Chemical), and the like can be used.

Furthermore, component (D-2) is an aluminum nitride powder having an average particle diameter of 20 µm or more and less than 80 µm. The shape of component (D-2) is not particularly limited, and may be spherical, irregular, a single crystal, polycrystal, or a mixture thereof. Component (D-2) can be synthesized, for example, by a so-called direct nitriding method, a reduction nitriding method, or the like. With aluminum nitride powder produced by a direct nitriding method, the average particle diameter can be made within a target range by further pulverizing or the like. Such component (D-2) is generally available. TFZ series manufacturing by Toyo Aluminium K.K., AN series manufactured by Combustion Synthesis Co., Ltd., and the like can be used for an irregular form, and AIN series manufactured by Showa Denko K.K., andANF series manufactured by MARUWA CO., LTD., and the like can be used for a spherical form.

Furthermore, component (D-3) is a spherical aluminium oxide powder and/or spherical magnesium oxide powder having an average particle diameter of 80 µm or more, respectively. Such component (D-3) is generally available. For example, spherical melt-solidified aluminum oxide powders (AY90-150 from Micron and DAM-90, DAM-120 from Denka) and spherical magnesium oxide powders (DMG-120 from Denka), and the like can be used.

The total amount of the aforementioned components (D-1) to (D-3) is an amount of 70 to 90% by volume, and preferably an amount of 75 to 85% by volume of the present composition. On the other hand, the amount of the aforementioned component (D-2) is an amount of 5 to 30% by volume, and preferably an amount of 20 to 30% by volume of the present composition. This is because if the total amount of the aforementioned components (D-1) to (D-3) is equal to or above the lower limit of the aforementioned range, the present composition can form a thermally conductive member having high thermal conductivity. On the other hand, if the amount is equal to or below the upper limit of the aforementioned range, the handling and filling properties of the present composition is improved. Furthermore, when the amount of the aforementioned component (D-2) is equal to or above the lower limit of the aforementioned range, the present composition can form a thermally conductive member having high thermal conductivity. On the other hand, when the amount is equal to or less than the upper limit of the aforementioned range, the occurrences of internal cracks in the thermally conductive member obtained by curing the present composition at high temperatures can be suppressed. Note that although the amount of the aforementioned component (D-1) is not limited, a thermally conductive silicone composition having more favorable handling and filling properties can be obtained, and therefore, the amount is preferably 5 to 50% by volume or 10 to 30% by volume of the present composition.

Component (E) is a component that functions as a surface treating agent or wetting agent for component (D) in the present composition, and comprises (E-1) an organopolysiloxane represented by the following general formula:

R¹(R²₂SiO)ₘSiR²₂-R³-SiR²ₐ(OR⁴)₍₃₋ₐ₎

and (E-2) an alkoxysilane represented by the following general formula or a partially hydrolyzed condensate thereof:

R⁵_{b}R²_{c}Si(OR⁴)_{(3-b-c)}.

In the aforementioned component (E-1), in the formula, R¹ represents an alkyl group having 1 to 6 carbon atoms or an alkenyl group having 2 to 6 carbon atoms. Examples of the alkyl groups of R¹ include methyl groups, ethyl groups, propyl groups, butyl groups, pentyl groups, and heptyl groups. Furthermore, examples of alkenyl groups of R¹ include vinyl groups, allyl groups, butenyl groups, pentenyl groups, and hexenyl groups.

Furthermore, in the formula, R² independently represent an alkyl group having 1 to 6 carbon atoms, and examples include the same alkyl groups as R¹ described above.

Furthermore, in the formula, R³ represents an oxygen atom or an alkylene group having 2 to 6 carbon atoms. Examples of the alkylene group of R³ include ethylene groups, propylene groups, butylene groups, pentylene groups, and heptylene groups.

Furthermore, in the formula, R⁴ represents an alkyl group having 1 to 3 carbon atoms, and examples include methyl groups, ethyl groups, and propyl groups.

Furthermore, in the formula, "m" represents an integer from 1 to 200, and preferably an integer from 5 to 200, an integer from 10 to 200, an integer from 100 to 200, or an integer from 110 to 200.

Furthermore, in the formula, "a" represents 0, 1, or 2, and preferably 0 or 1.

Examples of component (E-1) include the following: an organopolysiloxane represented by the following formula:

(CH₃)₃SiO[(CH₃)₂SiO]₃₀Si(OCH₃)₃,

an organopolysiloxane represented by the following formula:

(CH₂=CH)(CH₃)₂SiO[(CH₃)₂SiO]₂₅Si(OCH₃)₃,

an organopolysiloxane represented by the following formula:

(CH₃)₃SiO[(CH₃)₂SiO]₁₁₀Si(OCH₃)₃,

and an organopolysiloxane represented by the following formula:

(CH₃)₃SiO[(CH₃)₂SiO]₂₅Si(CH₃)₂-C₂H₄-Si(OCH₃)₃.

On the other hand, in the aforementioned component (E-2), R² in the formula represents an alkyl group having 1 to 6 carbon atoms, and examples include the same groups as described above.

In the formula, R⁴ represents an alkyl group having 1 to 3 carbon atoms, and examples include the same groups as described above.

In the formula, R⁵ represents an alkyl group having 6 to 18 carbon atoms, and examples include hexyl groups, octyl groups, dodecyl groups, tetradecyl groups, hexadecyl groups, and octadecyl groups.

Furthermore, in the aforementioned equation, "b" represents 1 or 2, "c" represents 0 or 1, and "b" + "c" is 1 or 2.

Examples of such component (E-2) include hexyltrimethoxysilanes, octyltrimethoxysilanes, decyltrimethoxysilanes, undecyltrimethoxysilanes, dodecyltrimethoxysilanes, and tetradecyltriethoxysilanes. Decyltrimethoxysilanes are preferred.

In the aforementioned component (E), the mass ratio of component (E-1) to component (E-2) is an amount within a range of 95:5 to 5:95, and preferably an amount within a range of 90:10 to 10:90, an amount within a range of 85:15 to 30:70, or an amount within a range of 85:15 to 60:40. This is because when component (E-1) and component (E-2) are used within the range of the aforementioned mass ratio, the handling and filling properties of the present composition can be improved even when a large amount of component (D) is blended.

In present composition, the amount of the aforementioned component (E) is an amount of 0.1 to 5.0 parts by mass, and preferably an amount of 0.1 to 4.5 parts by mass or 0.2 to 4.0 parts by mass relative to 100 parts by mass of component (D). This is because when the amount of component (E) is equal to or above the lower limit of the aforementioned range, the surface of component (D) can be sufficiently treated. On the other hand, when the amount is equal to or below the upper limit of the aforementioned range, mechanical properties of a thermally conductive member obtained by curing the present composition are favorable.

Note that unlike component (E-2), component (E-1) has a polysiloxane structure with a hydrolyzable silyl group at one molecular chain terminal. Therefore, component (D) can be treated in combination with component (E-2), or a surface treatment can be performed using component (E-1) after surface treating with component (E-2). Thus, handling and filling properties of the present composition can be improved even when a large amount of component (D) is blended, and thixotropy and vertical retention properties can be improved.

The surface treatment method using component (E-1) and component (E-2) is not particularly limited, but a direct treatment method on component (D), an integral blend method, a dry concentrate method, or the like can be used. Examples of a direct treatment method include dry methods, slurry methods, spray methods, and the like. Examples of an integral blend method include direct methods, master batch methods, and the like. Of these, dry methods, slurry methods, and direct methods are often used. Preferably, component (D) may be in the form where the entire amount of component (E-1) and component (E-2) are pre-mixed or in a plurality of stages using a known mixing device to treat the surface thereof.

In the present invention, the surface treatment method using component (E-1) and component (E-2) is preferably a direct treatment method. A most preferable example includes a heated surface treatment method in which component (D), component (E-1) and component (E-2) are mixed and heated (base heated). The temperature conditions and stirring time can be designed based on the amount of sample, but are preferably within a range of 120 to 180°C and 0.25 to 10 hours. Component (D) can also be treated during mixing under room temperature conditions instead of during a heating and stirring treatment, and this treatment can also be selected.

There is no particular limitation as to the mixing device described above, and examples include single or double-shaft continuous mixers, double rolls, Ross mixers, Hobart mixers, dental mixers, planetary mixers, kneader mixers, Henschel mixers, and the like.

The present composition preferably contains (F) a hydrosilylation reaction inhibitor to extend the pot life thereof and improve handling properties. Examples of such compound (F) include: 2-methyl-3-butyn-2-ol, 3,5-dimethyl-1-hexyn-3-ol, 2-phenyl-3-butyn-2-ol, and other acetylene compounds; 3-methyl-3-penten-1-yne, 3,5-dimethyl-3-hexen-1-yne, and other enyne compounds; 1,3,5,7-tetramethyl-1,3,5,7-tetravinyl cyclotetrasiloxane, 1,3,5,7-tetramethyl-1,3,5,7-tetrahexenyl cyclotetrasiloxane, and other cycloalkenylsiloxanes; and benzotriazole and other triazole compounds.

The amount of such component (F) is not limited, but is preferably within a range of 0.001 to 5 % by mass of the present composition.

The present composition may further contain (G) a heat resistance-imparting agent to improve the heat resistance of a thermally conductive member obtained by curing the present composition. Examples of such component (G) include: iron oxides, titanium oxides, cerium oxides, magnesium oxides, aluminum oxides, zinc oxides, and other metal oxides; cerium hydroxides and other metal hydroxides; phthalocyanine compounds, carbon black, cerium silanolate, cerium fatty acid salts, reaction products of organopolysiloxanes and a carboxylate salt of cerium; and the like. Metal phthalocyanine compounds such as a copper phthalocyanine compound or the like disclosed in Japanese Unexamined Patent Application Publication (Translation of PCT Application) No. 2014-503680 are particularly preferable. Example of the copper phthalocyanine compound include 29H, 31H-phthalocyaninato (2-)-N29, N30, N31, N32 coppers. Such phthalocyanine compounds are commercially available. For example, Stan-tone (trademark) 40SP03 from PolyOne Corporation (Avon Lake, Ohio, USA.) can be used.

The blended amount of such component (G) is not particularly limited, but is preferably within a range of 0.01 to 5.0 % by mass, 0.05 to 0.2 % by mass, or 0.07 to 0.1 % by mass of the present composition.

Another optional component may be blended into the present composition within a scope that does not impair the present invention. Examples of such optional components include: fumed silica, wet silica, crushed quartz, titanium oxide, magnesium carbonate, zinc oxide, iron oxide, diatomaceous earth, carbon black, and other inorganic fillers; organopolysiloxanes that do not have silicon-bonded hydrogen atoms and silicon-bonded alkenyl groups; and other, cold resistance-imparting agents, flame retarders, pigments, dyes, and the like. Furthermore, the present composition can also be blended, if desired, with one or more antistatic agents containing a known adhesive imparting agent, cationic surfactant, anionic surfactant, nonionic surfactant, or the like; a dielectric filler; an electrically conductive filler; a mold-releasing component; a thixotropic imparting agent; an antifungal agent; an organic solvent; and the like.

### <Manufacturing Method of Thermally Conductive Silicone Composition>

A method of preparing the present composition is not particularly limited, but can be prepared, for example, by mixing component (D) and component (E-1) in advance, then mixing component (E-2), treating the surface of component (D) with component (E-1), followed by component (E-2), and then mixing the remaining components (A) to (C), component (G), and another optional component. Alternatively, preparation can be performed by mixing component (D) and component (E-1) in component (A), then mixing component (E-2), treating the surface thereof with component (E-1), followed by component (E-2), and then mixing the remaining component (B), component (C), component (F), and another optional component. Alternatively, preparation can be performed by mixing component (A), component (B), component (E-1) and component (E-2), followed by mixing and treating component (D), and then mixing the remaining component (C), component (F), and another optional component. Furthermore, preparation can be performed by mixing component (E-1) with a portion of component (D), and mixing the remainder of component (D) with component (E-2), when mixing component (D) and component (E-1) in advance, and then mixing component (E-2).

The mixing method of each component is not particularly limited, and a conventionally known method can be used. However, the components are preferably mixed using a normally used mixing device. Examples of such mixing device include single or double-shaft continuous mixers, double rolls, Ross mixers, Hobart mixers, dental mixers, planetary mixers, kneader mixers, and Henschel mixers.

The present composition can be a one-component composition (including a one-liquid component type) or, if necessary, a multi-component composition (multi-liquid component type, in particular, a two-liquid component type).

The present composition has favorable handling and filling properties in an uncured state. Although the viscosity of the present composition at 25°C is not limited, the viscosity at a strain rate of 1.0 (1/s) measured using a rheometer or the like is preferably within a range of 50 to 600 Pa s.

The present composition is cured by a hydrosilylation reaction to form a thermally conductive member having high thermal conductivity. Temperature conditions for curing the present composition are not particularly limited, but are usually within a range of 20°C to 150°C, and more preferably within a range of 20°C to 80°C. Furthermore, in some cases, curing may be performed in a short time at a high temperature, or curing may be performed over a long period of time (for example, several hours to several days) at a low temperature such as room temperature or the like.

### <Thermally Conductive Member>

The thermally conductive member of the present invention is obtained by curing the aforementioned composition, is relatively flexible, and, for example, preferably has a hardness that satisfies a range of 10 to 80 by a Type E hardness meter specified in JIS K6249. A thermally conductive member having such hardness can exhibit properties such as low elastic modulus and low stress, and can improve the tight fitting properties and followability between a heat-generating member and a heat-dissipating member of an electronic component.

Furthermore, the thermally conductive member has high thermal conductivity, for example, a thermal conductivity of 7 W/m·K or more. The thermally conductive member is useful as a heat transfer material (thermally conductive member) to be interposed at an interface between a thermal boundary surface of a heat-generating component and a heat-dissipating member such as a heat sink, a circuit board, or the like for cooling of the heat-generating component by heat conduction, and a heat-dissipating structure can be formed with the composition. Herein, although the type, size, and detailed structure of the heat-generating component are not particularly limited, the thermally conductive member has excellent gap-filling properties to a member while having high thermal conductivity, high tight fitting properties and followability even to a heat-generating component having fine irregularities and a narrow gap structure, and flexibility, and thus is suitable for heat-dissipating structures of electric and electronic equipment including cell type secondary batteries.

### Examples

The thermally conductive silicone composition and thermally conductive member of the present invention will be described in detail using examples. Note that the viscosity (mPa s) in the examples is the value at 25°C measured using a rotational viscometer in accordance with JIS K7117-1. Furthermore, the appearance and viscosity of the thermally conductive silicone composition, and the thermal conductivity, hardness, and percentage of internal cracks of the thermally conductive member obtained by curing the composition were evaluated as follows.

### <Appearance of Thermally Conductive Silicone Composition>

The condition of the thermally conductive silicone composition at 25°C was visually observed.

### <Viscosity of Thermally Conductive Silicone Composition>

The viscosity (Pa s) of the thermally conductive silicone composition at 25°C was measured by RheoCompass MCR102 manufactured by Anton Paar. A 20 mm diameter plate was used for the geometry. A gap was set to 0.6 mm and a shear rate was set 1.0 (1/s).

### <Thermal Conductivity of Thermally Conductive Member>

The thermally conductive silicone composition was filled into a mold with a height of 6 mm, a length of 50 mm, and a width of 30 mm, cured at 25°C for one day, and then removed from the mold to prepare a thermally conductive member. The thermal conductivity of the thermally conductive member was measured by TPS-500 (hot disk method) manufactured by KYOTO ELECTRONICS MANUFACTURING CO., LTD.

### <Hardness of Thermally Conductive Member>

The hardness of the thermally conductive member prepared as described above was measured by an ASKER TYPE E hardness tester manufactured by ASKER.

### <Percentage of Internal Cracks in Thermally Conductive Member>

The thermally conductive member prepared as described above was treated for one day in a circulating hot air oven at 150°C. Thereafter, it was removed and cooled to room temperature. The thermally conductive member was cut in a horizontal direction at a height of 6 mm to check the internal condition. The percentage of cracks observed on the cut surface was read with regard to the area, with 0% being a case where there were no cracks at all and the cut surface was uniform, and 100% being a case where cracks were observed over the entire cut surface.

### <Preparation of Thermally Conductive Silicone Composition>

A thermally conductive silicone composition was prepared by uniformly mixing the following components to achieve the compositions shown in Tables 1 to 4. Note that a specific preparation method will be described in Example 1. Note that the molar ratio of the silicon atom-bonded hydrogen atoms in component (B) to the alkenyl groups in component (A) in the thermally conductive silicone composition was set to 0.61.

The following component was used as component (A).
(a-1): a dimethylpolysiloxane blocked with dimethylvinylsiloxy groups at both molecular chain terminals and having a viscosity of 60 mPa·s (amount of vinyl groups: 1.53 mass%)

The following components were used as component (B).
(b-1): a copolymer of methylhydrogensiloxane and dimethylsiloxane block with trimethylsiloxy groups at both molecular chain terminals, having on average two silicon atom-bonded hydrogen atoms in a molecule, and having a viscosity of 20 mPa·s (amount of silicon atom-bonded hydrogen atoms: 0.10 mass%)
(b-2): a copolymer of methylhydrogensiloxane and dimethylsiloxane block with trimethylsiloxy groups at both molecular chain terminals, having on average five silicon atom-bonded hydrogen atoms in a molecule, and having a viscosity of 5 mPa·s (amount of silicon atom-bonded hydrogen atoms: 0.75 mass%)

The following component was used as component (C).
(c-1): a 1,3-divinyltetramethyldisiloxane solution of a 1,3-divinyltetramethyldisiloxane complex of platinum, having a platinum concentration of 0.6 mass%

The following components were used as component (D-1) in component (D).
(d-1-1): polyhedral spherical α-type aluminum oxide powder with an average particle diameter of 0.5 µm (AA04 from Sumitomo Chemical)
(d-1-2): crushed aluminum oxide powder with an average particle diameter of 0.4 µm (AES-12 from Sumitomo Chemical)
(d-1-3): spherical melt-solidified aluminum oxide powder with an average particle diameter of 2.5 µm (AZ2-75 from Micron)
(d-1-4): polyhedral spherical α-type aluminum oxide powder with an average particle diameter of 2 µm (AA2 from Sumitomo Chemical)

The following components were used as component (D-2) in component (D).
(d-2-1): amorphous aluminum nitride powder with an average particle diameter of 27 µm (TFZ-S30P from Toyo Aluminium)
(d-2-2): amorphous aluminum nitride powder with an average particle diameter of 72 µm (AN-HF70LG-HTZ from Combustion Synthesis)
(d-2-3): spherical aluminum nitride powder with an average particle diameter of 32 µm (AIN3001 from Showa Denko)

The following components were used as comparisons of component (D-2) in component (D).
(d-2-4): amorphous aluminum nitride powder with an average particle diameter of 19 µm (TFZ-S20P from Toyo Aluminium)
(d-2-5): amorphous aluminum nitride powder with an average particle diameter of 1.4 µm (TFZ-N01 P from Toyo Aluminium)

The following components were used as component (D-3) in component (D).
(d-3-1): spherical melt-solidified aluminum oxide powder with an average particle diameter of 83 µm (AY90-150 from Micron)
(d-3-2): spherical melt-solidified aluminum oxide powder with an average particle diameter of 95 µm (DAM-90 from Denka)
(d-3-3): spherical melt-solidified aluminum oxide powder with an average particle diameter of 121 µm (DAM-120 from Denka)
(d-3-4): spherical magnesium oxide powder with an average particle diameter of 96 µm (DMG-120 from Denka)

The following component was used as a comparison of component (D-3) in component (D).
(d-3-5): spherical melt-solidified aluminum oxide powder with an average particle diameter of 37 µm (AL35-125 from Micron)

The following components were used as component (E).
(e-1): an organopolysiloxane represented by the following formula:

   (CH₃)₃SiO[(CH₃)₂SiO]₃₀Si(OCH₃)₃
(e-2): decyltrimethoxysilane

The following component was used as component (F).
(f-1): 2-phenyl-3-butyn-2-ol

The following component was used as component (G).
(g-1): 29H, 31H-phthalocyaninato (2-)-N29, N30, N31, N32-copper

### <Example 1>

100 parts by mass of component (a-1), 30.4 parts by mass of component (b-1), 45.7 parts by mass of component (e-1), 7.1 parts by mass of component (e-2), 5.36 parts by mass of component (g-1), 518 parts by mass of component (d-1-1), and 714 parts by mass of component (d-1-3) were introduced into a 300 mL plastic container, which were then mixed for 1 minute at 1200 rpm using a THINKY Planetary Vacuum Mixer. Next, 893 parts by mass of component (d-2-1) was introduced and mixed for 1 minute at a rotational speed of 1200 rpm, and then 1250 parts by mass of component (d-3-1) was introduced and mixed for 1 minute at a rotational speed of 1200 rpm. Next, 0.022 parts by mass of component (f-1) and 0.54 parts by mass of component (b-2) were introduced and mixed for 30 seconds at a rotational speed of 1200 rpm. Thereafter, cooling to room temperature was performed, and then 2.68 parts by mass of component (c-1) was added and mixed for 3 minutes by a spatula to prepare a thermally conductive silicone composition.

The viscosity at 25°C was measured immediately after preparing the thermally conductive silicone composition. Thereafter, curing was performed at 25°C for 1 day, and the thermal conductivity and hardness of the obtained thermally conductive member were measured. Thereafter, the thermally conductive member was then treated in a circulating hot air oven at 150°C for 1 day, and then the percentage of internal cracks was measured. The results thereof are shown in Table 1.

### <Example 2>

A thermally conductive silicone composition was prepared in the same manner as in Example 1, except that 1250 parts by mass of component (d-3-2) were blended in place of component (d-3-1) in Example 1. The thermally conductive silicone composition and a thermally conductive member cured therewith were measured and evaluated in the same manner as in Example 1, and the results thereof are shown in Table 1.

### <Example 3>

A thermally conductive silicone composition was prepared in the same manner as in Example 1, except that 1250 parts by mass of component (d-3-3) were blended in place of component (d-3-1) in Example 1. The thermally conductive silicone composition and a thermally conductive member cured therewith were evaluated in the same manner as in Example 1, and the results thereof are shown in Table 1.

### <Example 4>

A thermally conductive silicone composition was prepared in the same manner as in Example 1, except that the blending amount of component (e-1) was set to 56.4 parts by mass, and 1239 parts by mass of component (d-3-4) were blended in place of component (d-3-1) in Example 1. The thermally conductive silicone composition and a thermally conductive member cured therewith were evaluated in the same manner as in Example 1, and the results thereof are shown in Table 1.

### <Example 5>

A thermally conductive silicone composition was prepared in the same manner as in Example 4, except that 893 parts by mass of component (d-2-2) were blended in place of component (d-2-1) in Example 4. The thermally conductive silicone composition and a thermally conductive member cured therewith were evaluated in the same manner as in Example 1, and the results thereof are shown in Table 1.

**[Table 1]**

| | | | | Present Invention | | | | |
|---|---|---|---|---|---|---|---|---|
| | | | | Example 1 | Example 2 | Example 3 | Example 4 | Example 5 |
| Composition of thermally conductive silicone composition (parts by mass) | (A) | | (a-1) | 100 | 100 | 100 | 100 | 100 |
| | (B) | | (b-1) | 30.4 | 30.4 | 30.4 | 30.4 | 30.4 |
| | | | (b-2) | 0.54 | 0.54 | 0.54 | 0.54 | 0.54 |
| | (C) | | (c-1) | 2.68 | 2.68 | 2.68 | 2.68 | 2.68 |
| | (D) | (D-1) | (d-1-1) | 518 | 518 | 518 | 518 | 518 |
| | | | (d-1-2) | 0 | 0 | 0 | 0 | 0 |
| | | | (d-1-3) | 714 | 714 | 714 | 714 | 714 |
| | | | (d-1-4) | 0 | 0 | 0 | 0 | 0 |
| | | (D-2) | (d-2-1) | 893 | 893 | 893 | 893 | 0 |
| | | | (d-2-2) | 0 | 0 | 0 | 0 | 893 |
| | | | (d-2-3) | 0 | 0 | 0 | 0 | 0 |
| | | | (d-2-4) | 0 | 0 | 0 | 0 | 0 |
| | | | (d-2-5) | 0 | 0 | 0 | 0 | 0 |
| | | (D-3) | (d-3-1) | 1250 | 0 | 0 | 0 | 0 |
| | | | (d-3-2) | 0 | 1250 | 0 | 0 | 0 |
| | | | (d-3-3) | 0 | 0 | 1250 | 0 | 0 |
| | | | (d-3-4) | 0 | 0 | 0 | 1239 | 1239 |
| | | | (d-3-5) | 0 | 0 | 0 | 0 | 0 |
| | (E) | (E-1) | (e-1) | 45.7 | 45.7 | 45.7 | 56.4 | 56.4 |
| | | (E-2) | (e-2) | 7.1 | 7.1 | 7.1 | 7.1 | 7.1 |
| | (F) | | (f-1) | 0.022 | 0.022 | 0.022 | 0.022 | 0.022 |
| | (G) | | (g-1) | 5.36 | 5.36 | 5.36 | 5.36 | 5.36 |
| Amount of component (D) | | | (vol. %) | 82.0 | 82.0 | 82.0 | 81.9 | 81.9 |
| Amount of component (D-2) | | | (vol. %) | 25.1 | 25.1 | 25.1 | 24.0 | 24.0 |
| Appearance | | | | Paste | Paste | Paste | Paste | Paste |
| Viscosity | | | (Pa·s) | 339 | 332 | 316 | 339 | 335 |
| Thermal conductivity | | | (W/m·K) | 8.2 | 9.1 | 9.1 | 9.6 | 8.9 |
| Hardness | | | | 57 | 45 | 42 | 60 | 58 |
| Percentage of internal cracks | | | (%) | 0 | 20 | 20 | 0 | 10 |

### <Example 6>

A thermally conductive silicone composition was prepared in the same manner as in Example 2, except that 518 parts by mass of component (d-1-2) were blended in place of component (d-1-1) in Example 2. The thermally conductive silicone composition and a thermally conductive member cured therewith were evaluated in the same manner as in Example 1, and the results thereof are shown in Table 2.

### <Example 7>

A thermally conductive silicone composition was prepared in the same manner as in Example 2, except that 714 parts by mass of component (d-1-4) were blended in place of component (d-1-3) in Example 2. The thermally conductive silicone composition and a thermally conductive member cured therewith were evaluated in the same manner as in Example 1, and the results thereof are shown in Table 2.

### <Example 8>

A thermally conductive silicone composition was obtained in the same manner as in Example 7, except that the blending amount of component (d-2-1) was set to 357 parts by mass and the blending amount of component (d-3-2) was set to 1786 parts by mass in Example 7. The thermally conductive silicone composition and a thermally conductive member cured therewith were evaluated in the same manner as in Example 1, and the results thereof are shown in Table 2.

### <Example 9>

A thermally conductive silicone composition was prepared in the same manner as in Example 7, except that the blending amount of component (d-2-1) was set to 179 parts by mass and the blending amount of component (d-3-2) was set to 1964 parts by mass in Example 7. The thermally conductive silicone composition and a thermally conductive member cured therewith were evaluated in the same manner as in Example 1, and the results thereof are shown in Table 2.

### <Example 10>

A thermally conductive silicone composition was prepared in the same manner as in Example 7, except that 893 parts by mass of component (d-2-3) were blended in place of component (d-2-1) in Example 7. The thermally conductive silicone composition and a thermally conductive member cured therewith were evaluated in the same manner as in Example 1, and the results thereof are shown in Table 2.

**[Table 2]**

| | | | | Present Invention | | | | |
|---|---|---|---|---|---|---|---|---|
| | | | | Example 6 | Example 7 | Example 8 | Example 9 | Example 10 |
| Composition of thermally conductive silicone composition (parts by mass) | (A) | | (a-1) | 100 | 100 | 100 | 100 | 100 |
| | (B) | | (b-1) | 30.4 | 30.4 | 30.4 | 30.4 | 30.4 |
| | | | (b-2) | 0.54 | 0.54 | 0.54 | 0.54 | 0.54 |
| | (C) | | (c-1) | 2.68 | 2.68 | 2.68 | 2.68 | 2.68 |
| | (D) | (D-1) | (d-1-1) | 0 | 518 | 518 | 518 | 518 |
| | | | (d-1-2) | 518 | 0 | 0 | 0 | 0 |
| | | | (d-1-3) | 714 | 0 | 0 | 0 | 0 |
| | | | (d-1-4) | 0 | 714 | 714 | 714 | 714 |
| | | (D-2) | (d-2-1) | 893 | 893 | 357 | 179 | 0 |
| | | | (d-2-2) | 0 | 0 | 0 | 0 | 0 |
| | | | (d-2-3) | 0 | 0 | 0 | 0 | 893 |
| | | | (d-2-4) | 0 | 0 | 0 | 0 | 0 |
| | | | (d-2-5) | 0 | 0 | 0 | 0 | 0 |
| | | (D-3) | (d-3-1) | 0 | 0 | 0 | 0 | 0 |
| | | | (d-3-2) | 1250 | 1250 | 1786 | 1964 | 1250 |
| | | | (d-3-3) | 0 | 0 | 0 | 0 | 0 |
| | | | (d-3-4) | 0 | 0 | 0 | 0 | 0 |
| | | | (d-3-5) | 0 | 0 | 0 | 0 | 0 |
| | (E) | (E-1) | (e-1) | 45.7 | 45.7 | 45.7 | 45.7 | 45.7 |
| | | (E-2) | (e-2) | 7.1 | 7.1 | 7.1 | 7.1 | 7.1 |
| | (F) | | (f-1) | 0.022 | 0.022 | 0.022 | 0.022 | 0.022 |
| | (G) | | (g-1) | 5.36 | 5.36 | 5.36 | 5.36 | 5.36 |
| Amount of component (D) | | | (vol. %) | 82.0 | 82.0 | 81.5 | 81.3 | 81.3 |
| Amount of component (D-2) | | | (vol. %) | 25.1 | 25.1 | 10.3 | 5.2 | 25.1 |
| Appearance | | | | Paste | Paste | Paste | Paste | Paste |
| Viscosity | | | (Pa·s) | 582 | 470 | 289 | 242 | 344 |
| Thermal conductivity | | | (W/m·K) | 8.7 | 9.9 | 7.8 | 7.3 | 8.1 |
| Hardness | | | | 70 | 58 | 51 | 34 | 42 |
| Percentage of internal cracks | | | (%) | 20 | 10 | 5 | 0 | 0 |

### <Comparative Example 1>

A thermally conductive silicone composition was prepared in the same manner as in Example 2, except that 893 parts by mass of component (d-2-4) were blended in place of component (d-2-1) in Example 2. The thermally conductive silicone composition and a thermally conductive member cured therewith were evaluated in the same manner as in Example 1, and the results thereof are shown in Table 3.

### <Comparative Example 2>

A thermally conductive silicone composition was prepared in the same manner as in Example 2, except that the blending amount of component (d-2-1) was set to 1250 parts by mass and the blending amount of component (d-3-2) was set to 893 parts by mass in Example 2. The thermally conductive silicone composition and a thermally conductive member cured therewith were evaluated in the same manner as in Example 1, and the results thereof are shown in Table 3.

### <Comparative Example 3>

A thermally conductive silicone composition was prepared in the same manner as in Example 1, except that the blending amount of component (d-2-1) was set to 714 parts by mass, and 1071 parts by mass of component (d-2-2) were blended in place of component (d-3-1) in Example 1. The thermally conductive silicone composition and a thermally conductive member cured therewith were evaluated in the same manner as in Example 1, and the results thereof are shown in Table 3.

### <Comparative Example 4>

A thermally conductive silicone composition was prepared in the same manner as in Example 1, except that 1250 parts by mass of component (d-2-2) were blended in place of not blending component (d-3-1) in Example 1. The thermally conductive silicone composition and a thermally conductive member cured therewith were evaluated in the same manner as in Example 1, and the results thereof are shown in Table 3.

### <Comparative Example 5>

A thermally conductive silicone composition was prepared in the same manner as in Example 2, except that 714 parts by mass of component (d-2-5) were blended in place of not blending component (d-1-3) in Example 2. The thermally conductive silicone composition and a thermally conductive member cured therewith were evaluated in the same manner as in Example 1, and the results thereof are shown in Table 3.

**[Table 3]**

| | | | | Comparative Examples | | | | |
|---|---|---|---|---|---|---|---|---|
| | | | | Comp. Example 1 | Comp. Example 2 | Comp. Example 3 | Comp. Example 4 | Comp. Example 5 |
| Composition of thermally conductive silicone composition (parts by mass) | (A) | | (a-1) | 100 | 100 | 100 | 100 | 100 |
| | (B) | | (b-1) | 30.4 | 30.4 | 30.4 | 30.4 | 30.4 |
| | | | (b-2) | 0.54 | 0.54 | 0.54 | 0.54 | 0.54 |
| | (C) | | (c-1) | 2.68 | 2.68 | 2.68 | 2.68 | 2.68 |
| | (D) | (D-1) | (d-1-1) | 518 | 518 | 518 | 518 | 518 |
| | | | (d-1-2) | 0 | 0 | 0 | 0 | 0 |
| | | | (d-1-3) | 714 | 714 | 714 | 714 | 0 |
| | | | (d-1-4) | 0 | 0 | 0 | 0 | 0 |
| | | (D-2) | (d-2-1) | 0 | 1250 | 714 | 893 | 893 |
| | | | (d-2-2) | 0 | 0 | 1071 | 1250 | 0 |
| | | | (d-2-3) | 0 | 0 | 0 | 0 | 0 |
| | | | (d-2-4) | 893 | 0 | 0 | 0 | 0 |
| | | | (d-2-5) | 0 | 0 | 0 | 0 | 714 |
| | | (D-3) | (d-3-1) | 0 | 0 | 0 | 0 | 0 |
| | | | (d-3-2) | 1250 | 893 | 0 | 0 | 1250 |
| | | | (d-3-3) | 0 | 0 | 0 | 0 | 0 |
| | | | (d-3-4) | 0 | 0 | 0 | 0 | 0 |
| | | | (d-3-5) | 0 | 0 | 0 | 0 | 0 |
| | (E) | (E-1) | (e-1) | 45.7 | 45.7 | 45.7 | 45.7 | 45.7 |
| | | (E-2) | (e-2) | 7.1 | 7.1 | 7.1 | 7.1 | 7.1 |
| | (F) | | (f-1) | 0.022 | 0.022 | 0.022 | 0.022 | 0.022 |
| | (G) | | (g-1) | 5.36 | 5.36 | 5.36 | 5.36 | 5.36 |
| Amount of component (D) | | | (vol. %) | 82.0 | 82.3 | 81.3 | 83.1 | 82.6 |
| Amount of component (D-2) | | | (vol. %) | 25.1 | 34.5 | 52.1 | 56.6 | 43.6 |
| Appearance | | | | Paste | Paste | Paste | Paste | Paste |
| Viscosity | | | (Pa·s) | 167 | 520 | 309 | 625 | 1425 |
| Thermal conductivity | | | (W/m·K) | 7.7 | 10.5 | 9.2 | 10.1 | 9.9 |
| Hardness | | | | 20 | 69 | 50 | 71 | 68 |
| Percentage of internal cracks | | | (%) | 50 | 50 | 50 | 50 | 100 |

### <Comparative Example 6>

A thermally conductive silicone composition was prepared in the same manner as Example 2, except that 536 parts by mass of component (d-2-5) were blended and the blending amount of component (d-2-1) was set to 1071 parts by mass, in place of not blending component (d-1-1) and component (d-1-3) in Example 2. However, the obtained thermally conductive silicone composition was powdery.

### <Comparative Example 7>

A thermally conductive silicone composition was prepared in the same manner as in Example 1, except that 893 parts by mass of component (d-3-5) were blended in place of not blending component (d-2-1) in Example 1. The thermally conductive silicone composition and a thermally conductive member cured therewith were evaluated in the same manner as in Example 1, and the results thereof are shown in Table 4.

**[Table 4]**

| | | | | Comparative Examples | |
|---|---|---|---|---|---|
| | | | | Comp. Example 6 | Comp. Example 7 |
| Composition of thermally conductive silicone composition (parts by mass) | (A) | | (a-1) | 100 | 100 |
| | (B) | | (b-1) | 30.4 | 30.4 |
| | | | (b-2) | 0.54 | 0.54 |
| | (C) | | (c-1) | 2.68 | 2.68 |
| | (D) | (D-1) | (d-1-1) | 0 | 518 |
| | | | (d-1-2) | 0 | 0 |
| | | | (d-1-3) | 0 | 714 |
| | | | (d-1-4) | 0 | 0 |
| | | (D-2) | (d-2-1) | 1071 | 0 |
| | | | (d-2-2) | 0 | 0 |
| | | | (d-2-3) | 0 | 0 |
| | | | (d-2-4) | 0 | 0 |
| | | | (d-2-5) | 536 | 0 |
| | | (D-3) | (d-3-1) | 0 | 1250 |
| | | | (d-3-2) | 1250 | 0 |
| | | | (d-3-3) | 0 | 0 |
| | | | (d-3-4) | 0 | 0 |
| | | | (d-3-5) | 0 | 893 |
| | (E) | (E-1) | (e-1) | 45.7 | 45.7 |
| | | (E-2) | (e-2) | 7.1 | 7.1 |
| | (F) | | (f-1) | 0.022 | 0.022 |
| | (G) | | (g-1) | 5.36 | 5.36 |
| Amount of component (D) | | | (vol.%) | 80.4 | 81.1 |
| Amount of component (D-2) | | | (vol.%) | 49.2 | 0.0 |
| Appearance | | | | Powdery | Paste |
| Viscosity | | | (Pa·s) | Unmeasurable | 143 |
| Thermal conductivity | | | (W/m·K) | Unmeasurable | 5.9 |
| Hardness | | | | Unmeasurable | 29 |
| Percentage of internal cracks | | | (%) | Unmeasurable | 0 |

From the results of Examples 1 to 10, when the aluminum nitride powder having an average particle diameter of 20 µm or more and less than 80 µm is within a range of 5 to 30% by volume of the thermally conductive silicone composition, it was found that the present composition is a uniform paste prior to curing while exhibiting a high thermal conductivity of 7 W/m·K or more, and the occurrences of internal cracks was suppressed to less than 20% of an entire thermally conductive member obtained by curing, even under a high temperature condition of 150°C.

On the other hand, in Comparative Example 1, aluminum nitride powder having an average particle diameter of less than 20 µm was blended. Therefore, the obtained thermally conductive member was found to have internal cracks of 50% or more at 150°C. Furthermore, in Comparative Examples 2 to 5, it was also found that when the aluminum nitride powder was 30% or more by volume of the entire thermally conductive silicone composition, internal cracks of 50% or more occurred in the obtained thermally conductive member by heating at 150°C. Furthermore, in Comparative Example 6, aluminum nitride powder having an average particle diameter of less than 20 µm was blended and no thermally conductive powder other than aluminum nitride powder having an average particle diameter of 0.1 µm or more and less than 5 µm was blended. However, it was found that a uniform paste could not be obtained. Furthermore, in Comparative Example 7, the aluminum nitride powder having an average particle diameter of 20 µm or more and less than 80 µm was not blended, and therefore, it was found that the thermal conductivity of the obtained thermally conductive member was not 7 W/m·K or more.

### Industrial Applicability

The thermally conductive silicone composition of the present invention can cure to form a thermally conductive member having high thermal conductivity, for example, a thermal conductivity of 7 W/m·K or more, and in which the occurrence of internal cracks under high temperatures is suppressed, and therefore is useful as a thermal conductive material (thermally conductive member) for efficiently transferring heat from a heat-generating electronic component to a heat-dissipating member. Furthermore, the thermally conductive member of the present invention is flexible, has excellent gap filling properties, and has high tight fitting properties and followability even for heat-generating members having fine irregularities and a narrow gap structure, and therefore is preferable as a thermally conductive member for electrical and electronic equipment including secondary batteries.

## Claims

1. A thermally conductive silicone composition comprising:
(A) an organopolysiloxane having on average at least two alkenyl groups in a molecule and a viscosity at 25°C of 10 to 100,000 mPa·s;
(B) an organohydrogenpolysiloxane having on average at least two silicon atom-bonded hydrogen atoms in a molecule, the amount of silicon atom-bonded hydrogen atoms in component (B) being 0.2 to 5 mols relative to 1 mol of alkenyl groups in component (A);
(C) a catalytic amount of a hydrosilylation reaction catalyst;
(D) a thermally conductive filler comprising the following components (D-1) to (D-3):
(D-1) a thermally conductive powder other than an aluminum nitride powder, said thremally conductive powder having an average particle diameter of 0.1 µm or more and less than 5 µm;
(D-2) an aluminum nitride powder having an average particle diameter of 20 µm or more and less than 80 µm; and
(D-3) a spherical aluminum oxide powder and/or spherical magnesium oxide powder having an average particle diameter of 80 µm or more, respectively,
the total amount of components (D-1) to (D-3) being an amount that is 70 to 90% by volume of the present composition, and the amount of component (D-2) being an amount that is 5 to 30% by volume of the present composition; and
(E) a surface treating agent or wetting agent comprising the following components (E-1) and (E-2):
(E-1) an organopolysiloxane represented by the following general formula:
R¹(R²₂SiO)ₘSiR²₂-R³-SiR²ₐ(OR⁴)₍₃₋ₐ₎
wherein R¹ represents an alkyl group having 1 to 6 carbon atoms or an alkenyl group having 2 to 6 carbon atoms, each R² independently represents an alkyl group having 1 to 6 carbon atoms, R³ represents an oxygen atom or an alkylene group having 2 to 6 carbon atoms, R⁴ represents an alkyl group having 1 to 3 carbon atoms, "m" represents an integer from 1 to 200, and "a" represents 0, 1, or 2;
(E-2) an alkoxysilane represented by the following general formula or a partially hydrolyzed condensate thereof:
R⁵_{b}R²_{c}Si(OR⁴)_{(3-b-c)}
wherein R² and R⁴ are the same as described above, R⁵ represents an alkyl group having 6 to 18 carbon atoms, "b" represents 1 or 2, "c" represents 0 or 1, and "b" + "c" is 1 or 2, the mass ratio of component (E-1) to component (E-2) being 95:5 to 5:95, the amount of component (E) being 0.1 to 5.0 parts by mass to 100 parts by mass of component (D).

2. The thermally conductive silicone composition according to claim 1, wherein component (D-1) is a thermally conductive powder selected from silver powders, aluminum powders, aluminum oxide powders, zinc oxide powders, and graphite powders.

3. The thermally conductive silicone composition according to claim 1, wherein component (D-1) is a thermally conductive powder comprising the following components (D-1-1) and (D-1-2):
(D-1-1) a thermally conductive powder other than an aluminum nitride powder, said thermally conductve powder having an average particle diameter of 0.1 µm or more and less than 1 µm; and
(D-1-2) a thermally conductive powder other than an aluminum nitride powder, said thermally conductive powder having an average particle diameter of 1 µm or more and less than 5 µm; the mass ratio of component (D-1-1) to component (D-1-2) being 95:5 to 5:95.

4. Thermally conductive silicone composition according to claim 1, further comprising: (F) a hydrosilylation reaction inhibitor at 0.001 to 5 % by mass of the present composition.

5. Thermally conductive silicone composition according to claim 1, further comprising: (G) a heat resistance-imparting agent at 0.01 to 5.0 % by mass of the present composition.

6. The thermally conductive silicone composition according to any one of claims 1 to 4, which is cured to form a thermally conductive member with a thermal conductivity of 7 W/m·K or more.

7. A thermally conductive member obtained by curing the thermally conductive silicone composition according to any one of claims 1 to 6.
